# EUROPÄISCHE PATENTANMELDUNG

(11) **EP 2 436 473 A1**
(43) Veröffentlichungstag der Anmeldung: **04.04.2012**
(21) Anmeldenummer: 10181838.3
(22) Anmeldetag: 29.09.2010
(51) Int. Cl.: B23K 20/02, B23K 20/16, B23K 20/227, B23K 1/00

(54) **Verfahren und Vorrichtung zur Herstellung eines Metallkörpers aus übereinander angeordneten Metalllagen**

(71) Anmelder: Kompetenzzentrum Neue Materialien Nordbayern GmbH, 95448 Bayreuth (DE)
(72) Erfinder: Ploshikhin, Vasily, 95448 Bayreuth (DE); Rudnik, Yegor, 95448 Bayreuth (DE); Prihodovsky, Andrey, 95448 Bayreuth (DE)
(74) Vertreter: Lösch, Christoph Ludwig Klaus

(57) **Zusammenfassung**

Die Erfindung betrifft ein Verfahren sowie eine Vorrichtung zur Herstellung eines Metallkörpers aus übereinander angeordneten Metalllagen, mit folgenden Verfahrensschritten:
a) Positionieren eines mindestens aus zwei übereinander angeordneten Metallplatinen (1, 2) und mindestens einem jeweils zwischen zwei der Metallplatinen (1, 2) positionierten Zwischenkörper, der zumindest eine Schmelzschicht (3) mit einem metallischen Anteil aufweist, bestehenden Ausgangsschichtkörpers auf einer ersten Kontaktplatte (4), wobei die Liquidustemperatur der Schmelzschicht geringer ist als die Solidustemperatur des Grundwerkstoffs der Metallplatinen (1, 2);
b) Anpressen einer zur ersten Kontaktplatte (4) parallelen weiteren Kontaktplatte (5) an den Ausgangsschichtkörper, sodass eine Druckaufbringung senkrecht zu den Metallplatinen (1, 2) erfolgt, wobei mindestens die weitere Kontaktplatte (5) eine Temperatur zwischen der Liquidustemperatur der Schmelzschicht (3) und der Solidustemperatur des Grundwerkstoffs der Metallplatinen (1, 2) besitzt, und wobei das Anpressen mit einem Druck, insbesondere mit einem Druck von 1 bis 50 MPa, bevorzugt von 2 bis 10 MPa, und für eine Zeitspanne, insbesondere für eine Zeitspanne von 5 Sekunden bis 60 Minuten, bevorzugt für 20 Sekunden bis 10 Minuten, erfolgt, sodass zwischen zwei übereinander angeordneten Metallplatinen (1, 2) eine stoffschlüssige Verbindung entsteht.

## Beschreibung

Die Erfindung betrifft ein Verfahren und eine Vorrichtung zur Herstellung eines Metallkörpers aus übereinander angeordneten Metalllagen.

Der Aufbau von Bauteilen aus einzelnen Schichten ist aus verschiedenen "Rapid Prototyping"-Verfahren bzw. generativen Fertigungsverfahren bekannt. Diese werden als Schicht-Laminat-Verfahren bezeichnet. Bei derartigen Verfahren wird das gewünschte Bauteil in der Regel mit Hilfe entsprechender Konstruktionsprogramme virtuell in zweidimensionale Schnitte zerlegt, die die Innen- und Außenkonturen der benötigten Ausgangsschichten bestimmen. Aufbauend auf diesen Daten werden die Schichten durch Trennverfahren, wie z.B. Laserstrahlschneiden oder Fräsen, vorbereitet. Anschließend werden die Einzelschichten übereinander gestapelt und miteinander verbunden. Hierbei kommen insbesondere Papier, Kunststoffe und weiche Metalle, wie Aluminium, zum Einsatz. Die Verbindung erfolgt dabei vorwiegend durch Kleben. Daneben wurden auch Fertigungsverfahren entwickelt, bei denen die Bauteile aus Metallfolien bzw. -blechen aufgebaut und die Einzelbleche durch Diffusionsschweißen oder Löten miteinander verbunden werden.

Aufgabe der Erfindung ist es, ein Verfahren und eine Vorrichtung zur Herstellung eines Metallkörpers aus übereinander angeordneten Metalllagen bereitzustellen, welche Metallkörper von hoher Verbindungsqualität und großen Bauteilabmessungen ermöglichen.

Diese Aufgabe wird durch ein Verfahren mit den Merkmalen des Patentanspruchs 1 realisiert. Vorteilhafte Ausführungsformen des Verfahrens sind in den Unteransprüchen 2 - 14 realisiert. Für die Vorrichtung wird die Aufgabe durch die Merkmale des Patentanspruchs 15 gelöst.

Das erfindungsgemäße Verfahren zur Herstellung eines Metallkörpers aus übereinander angeordneten Metalllagen weist folgende Verfahrensschritte auf: a) Positionieren eines mindestens aus zwei übereinander angeordneten Metallplatinen und mindestens einem jeweils zwischen zwei der Metallplatinen positionierten Zwischenkörper, der zumindest eine Schmelzschicht mit einem metallischen Anteil, d.h. mit einer metallischen Komponente, aufweist, bestehenden Ausgangsschichtkörpers auf einer ersten Kontaktplatte, wobei die Liquidustemperatur des metallischen Anteils der Schmelzschicht (im Folgenden auch als Liquidustemperatur der Schmelzschicht bezeichnet) geringer ist als die Solidustemperatur des Grundwerkstoffs der Metallplatinen; b) Anpressen einer zur ersten Kontaktplatte parallelen weiteren Kontaktplatte an den Ausgangsschichtkörper, sodass eine Druckaufbringung senkrecht zu den Metallplatinen erfolgt, wobei mindestens die weitere Kontaktplatte eine Temperatur zwischen der Liquidustemperatur der Schmelzschicht und der Solidustemperatur des Grundwerkstoffs der Metallplatinen besitzt, und wobei das Anpressen mit einem Druck (Kraft bezogen auf die Fläche der Metallplatinen), insbesondere mit einem Druck von 1 bis 50 MPa, bevorzugt von 2 bis 10 MPa, und für eine Zeitspanne, insbesondere für eine Zeitspanne von 5 Sekunden bis 60 Minuten, bevorzugt für 20 Sekunden bis 10 Minuten, erfolgt, sodass zwischen zwei übereinander angeordneten Metallplatinen eine stoffschlüssige Verbindung entsteht.

Unter dem Ausgangsschichtkörper wird hierbei das aus den aufeinander gestapelten, zu verbindenden Metallplatinen bestehende Laminat verstanden, wobei jeweils zwischen zwei der Metallplatinen ein Zwischenkörper angeordnet ist. Dabei besitzen sowohl die Metallplatinen als auch der Zwischenkörper im Wesentlichen eine blechförmige Grundform, d.h. die Abmessungen in Längen- und Breitenrichtung sind signifikant größer als deren Dicke. Mit anderen Worten besteht der Ausgangsschichtkörper aus einer Abfolge alternierender Schichten aus Metallplatine und Zwischenkörper. Durch Anwendung des Verfahrens auf diesen Ausgangsschichtkörper entsteht aus diesem das als Metallkörper bezeichnete Produkt. Die Metalllagen des Metallkörpers entstehen damit aus den Metallplatinen und dem Zwischenkörper bzw. den Zwischenkörpern des Ausgangsschichtkörpers.

Unter Metallplatine wird hierbei jedes Metallelement verstanden, das eine im Wesentlichen blechförmige Grundform (insbesondere mit einer Dicke von bis zu 100 mm) aufweist, wobei diese sowohl planar als auch gekrümmt bzw. dreidimensional geformte Bereiche aufweisen kann.

Unter der Liquidustemperatur wird diejenige Temperatur verstanden, oberhalb derer der jeweilige Werkstoff in einer homogenen flüssigen Phase vorliegt. Unter Soldiustemperatur wird diejenige Temperatur verstanden, unterhalb derer der Werkstoff vollständig erstarrt ist. Bei Metalllegierungen liegt die Solidustemperatur unterhalb der Liquidustemperatur, während bei reinen Metallen die Solidustemperatur und die Liquidustemperatur zusammenfallen. Die Liquidustemperatur der Schmelzschicht ist folglich die Temperatur, oberhalb der die Schmelzschicht in einer homogenen flüssigen Phase vorliegt. Die Solidustemperatur des Grundwerkstoffs der Metallplatinen ist diejenige Temperatur, unterhalb der im Grundwerkstoff der Metallplatinen keine flüssige Phase existiert.

Durch das Anpressen der Kontaktplatten schmilzt die Schmelzschicht aufgrund der Einwirkung von Temperatur und Druck auf, wodurch sich (gegebenenfalls nach einer anschließenden Abkühlung) eine stoffschlüssige Verbindung zwischen den einzelnen Metallplatinen ausbildet. Dabei werden die Parameter Druck, Temperatur und Zeit entsprechend aufeinander abgestimmt. Auf diese Weise wird ein Metallkörper mit einer hohen Verbindungsqualität erzeugt. Außerdem ermöglicht die Verwendung von Kontaktplatten die Erzeugung von großvolumigen Metallkörpern, da im Gegensatz zu Verfahren, die in Heiz- oder Druckkammern ausgeführt werden, keine räumlichen Beschränkungen bestehen.

Ferner wird durch das Anpressen der Kontaktplatten eine schnelle Temperierung der Fügezone, d.h. eine schnelle Erwärmung der Fügezone auf eine Temperatur zwischen der Liquidustemperatur der Schmelzschicht und der Solidustemperatur der Metallplatinen, erreicht. Unter der Fügezone wird hierbei derjenige Bereich verstanden, der aus der Schmelzschicht und den angrenzenden Grundwerkstoffbereichen, in denen eine Diffusion der chemischen Elemente des jeweiligen Grundwerkstoffs in die Schmelzschicht und umgekehrt stattfindet. Durch die Kontaktplatten ist es insbesondere möglich, eine genau definierte Temperatur in die Bereiche der Metallplatinen, die mit dem Kontaktplatten in Verbindung stehen, einzubringen.

Das erfindungsgemäße Verfahren ist variabel einsetzbar. Insbesondere können die Temperatur, die die Kontaktplatte besitzt bzw. auf die die Fügezone gebracht wird, sowie die Zeitspanne, für die Druck zwischen Kontaktplatten und Metallplatinen besteht, an das zu fügende Werkstoffpaar aus Blechgrundwerkstoff und Schmelzschicht angepasst werden.

Der Kontakt zwischen Metallplatine und Kontaktplatte kann derart ausgebildet sein, dass sich die Kontaktplatte und das Metallblech direkt berühren. Es kann allerdings auch ein Kontaktverbesserungsmittel, das den Temperaturausgleich zwischen Kontaktplatte und Metallblech verbessert, vorhanden sein.

Ein weiterer Vorteil des Verfahrens besteht darin, dass die Wärme in die zu fügenden Metallbleche gleichmäßig eingetragen und abgeführt wird, was die den ansonsten auftretenden Blechverzügen entgegenwirkt.

Das erfindungsgemäße Verfahren kann beispielsweise für die Fertigung von Metallbauteilen eingesetzt werden, die eine komplizierte innere und/oder äußere Kontur besitzen. Ein Bespiel für derartige komplexe Bauteile sind Werkzeuge (etwa zum Formen von Metall- und Kunststoffleichtbauwerkstoffen), in denen innere Aufheiz-/ Kühlkanäle für eine gezielte Temperaturführung eingearbeitet sind. Bei der Fertigung von solchen Formen (z.B. Gussformen) ist es erwünscht, die Aufheiz-/Kühlkanäle für eine bessere Temperierung des herzustellenden Bauteils möglichst nah an die Arbeitsoberfläche zu platzieren. Das erfindungsgemäße Verfahren ermöglicht die Herstellung von derartigen Formen mit konturnahen Aufheiz-/ Kühlkanälen durch das Aneinanderfügen einzelner Metallplatinen mit Hilfe des Zwischenkörpers.

In einer bevorzugten Ausführungsform der Erfindung besteht der Zwischenkörper einzig aus der Schmelzschicht und die Schmelzschicht ist als eine Beschichtung auf mindestens einem der Metallplatinen ausgebildet. Mit anderen Worten sind bei dieser Ausführungsform die Metallplatinen mit der Schmelzschicht beschichtet. Für die Schichtabfolge des Ausgangsschichtkörpers ergibt sich damit, dass die beschichteten Metallplatinen unmittelbar aufeinander gestapelt sind, wobei die Beschichtung den Zwischenkörper im Sinn der Erfindung darstellt. In dieser Ausführungsform ist eine besonders einfache Handhabung des Ausgangsschichtkörpers möglich, da nur Metalllagen eines Typs (nämlich beschichtete Metallplatinen) positioniert werden müssen.

In einer weiteren vorteilhaften Ausführungsform ist der Zwischenkörper als ein beidseitig mit der Schmelzschicht beschichtetes Metallblech ausgebildet, wobei die Solidustemperatur des Grundwerkstoffs des Metallblechs höher ist als die Liquidustemperatur der Schmelzschicht.

Die Schmelzschicht kann auch in Form einer Lotpaste oder Lotfolie ausgebildet sein. In einer derartigen Ausführungsform entspricht der metallische Anteil der Schmelzschicht dem metallischen Anteil der Lotpaste bzw. Lotfolie.

Unter Grundwerkstoff wird derjenige Werkstoff verstanden, aus dem das Blechsubstrat bzw. die Metallplatine besteht, d.h. der Werkstoff des unbeschichteten Metallblechs.

Für die Schichtabfolge des Ausgangsschichtkörpers in diesem Ausführungsbeispiel ergibt sich damit, dass zwischen zwei (unbeschichteten) Metallplatinen ein beidseitig mit der Schmelzschicht beschichtetes Metallblech angeordnet ist. Der Zwischenkörper besteht hiermit aus dem beidseitig beschichteten Metallblech. In diesem Ausführungsbeispiel kann die Dicke und der Grundwerkstoff der Metallplatinen unabhängig von der Dicke und dem Grundwerkstoff des Metallblechs gewählt werden. Auch ist es möglich Metallplatinen mit unterschiedlichen Grundwerkstoffen zu verwenden (z.B. kann sich die auf einer ersten Seite des Zwischenkörpers positionierte Metallplatine eine ersten Werkstoffzusammensetzung und die auf einer gegenüberliegenden zweiten Seite positionierte Metallplatine eine andere Werkstoffzusammensetzung besitzen). Auf diese Weise kann die Zusammensetzung und die Schichtabfolge im Ausgangsschichtkörper variabel gestaltet werden.

In einer bevorzugten Ausführungsform der Erfindung werden nach dem Verfahrensschritt b) anschließend folgende Verfahrensschritte ausgeführt: c) Entfernen mindestens der weiteren Kontaktplatte; d) Anordnen mindestens eines weiteren Zwischenkörpers und mindestens einer weiteren Metallplatine auf den Ausgangsschichtkörper; e) Erneutes Ausführen des Verfahrensschritts b), sodass eine stoffschlüssige Verbindung zwischen dem Ausgangsschichtkörper und der weiteren Metallplatine entsteht. Dadurch wird der Metallkörper durch sequentielles Hinzufügen weiterer Metallplatinen aufgebaut. Auf diese Weise kann schnell und energieeffizient ein aus einer Vielzahl von Lagen aufgebauter Metallkörper generiert werden.

In einer weiteren vorteilhaften Ausführungsform werden anschließend folgende Verfahrensschritte ausgeführt: f) Entfernen mindestens der weiteren Kontaktplatte (5); g) Anordnen eines weiteren Zwischenkörpers auf den Ausgangsschichtkörper; h) Anordnen eines weiteren nach einem der vorhergehenden Ansprüche hergestellten Ausgangsschichtkörper auf den weiteren Zwischenkörper; i) Erneutes Ausführen des Verfahrensschritts b), sodass eine stoffschlüssige Verbindung zwischen den beiden Ausgangsschichtkörpern entsteht. Dadurch wird der Metallkörper aus mehreren Ausgangskörpern, die wiederum aus einzelnen Metallplatinen und Zwischenkörpern bestehen, aufgebaut. Mit anderen Worten wird ein vorgefertigter Block aus mehreren Metalllagen in einem Verfahrensschritt mit dem Metallkörper verbunden. Auf diese Weise wird die Aufbaugeschwindigkeit bzw. Aufbaurate des Verfahrens erhöht.

In vorteilhafter Weise wird ein Flussmittel zwischen den Zwischenkörper und den Metallplatinen aufgebracht. Dies erleichtert die Bildung einer stoffschlüssigen Verbindung und erhöht damit die Verbindungsqualität.

In einer weiteren vorteilhaften Ausführungsform wird die weitere Kontaktplatte in Verfahrensschritt b) auf eine Temperatur gebracht, sodass die Schmelzschicht aufschmilzt und anschließend die Kontaktplatte solange auf konstanter Temperatur gehalten wird, bis die Schmelze (d.h. die Schmelze, die sich durch Aufschmelzen der Schmelzschicht in der Fügezone bildet) isotherm erstarrt ist. Diese isotherme Erstarrung wird durch die im Vergleich zur Diffusion in Festkörpern schnellen Diffusionsvorgänge und Phasenumwandlung in der flüssigen Phase verursacht.

Die isotherme Erstarrung der Schmelze wird hierbei durch Diffusions- und Phasenumwandlungsvorgänge verursacht. Gleichzeitig mit der Erstarrung der Schmelze bildet sich somit die stoffschlüssige Verbindung aus.

In vorteilhafter Weise weist mindestens eine der Kontaktplatten eine Energiequelle, insbesondere einen Induktor, zum Temperieren der Kontaktplatte auf. Auf diese Weise ist eine schnelle und zugleich energieeffiziente Erwärmung der zu verbindenden Metallplatinen möglich.

In einer bevorzugten Ausführungsform erfolgen vor dem Verfahrensschritt a) ein Kontaktieren der ersten und der weiteren Kontaktplatte sowie ein gemeinsames Temperieren der Kontaktplatten. Durch das gemeinsame Temperieren wird die Energieeffizienz des Verfahrens weiter erhöht. Außerdem ist es möglich, durch eine einzige Temperiervorrichtung (z.B. Energiequelle) beide Kontaktplatten zu temperieren.

In einer weiteren bevorzugten Ausführungsform wird die Temperatur der mindestens einer der Kontaktplatten vor und/oder während der Druckaufbringung durch eine Temperaturregeleinrichtung geregelt, was zu einer besonders exakten Einstellung der Temperatur im Bereich der zu fügenden Metallplatinen führt.

In einer weiteren vorteilhaften Ausführungsform wir die erste Kontaktplatte im Verfahrensschritt b) gekühlt. Auf diese Weise ist ein schnelles Abkühlen desjenigen Teilbereichs des Metallkörpers, in dem die Metallplatinen bereits stoffschlüssig zu Metalllagen verbunden sind, möglich. Zugleich wird ein unerwünschtes Aufschmelzen bereits miteinander verbundener Metalllagen zuverlässig verhindert.

In einer weiteren vorteilhaften Ausführungsform wird der Metallkörper nach dem stoffschlüssigen Verbinden der Metallplatinen zwischen Kühlplatten, insbesondere wassergekühlte Kühlplatten, abgekühlt. Auf diese Weise ist ebenfalls ein schnelles und zuverlässiges Abkühlen der zusammengefügten Metalllagen möglich.

In vorteilhafter Weise werden die vorgenannten Verfahrensschritte in Umgebungsatmosphäre, insbesondere außerhalb eines Ofens, ausgeführt und anschließend erfolgt eine Wärmebehandlung des auf diese Weise hergestellten Metallkörpers in einem Ofen, insbesondere in einem Vakuumofen. Durch die anschließende Wärmebehandlung kann die Festigkeit zwischen den einzelnen Metalllagen erhöht werden. Außerdem erfolgt eine Homogenisierung der Materialeigenschaften der Fügezone und des Grundwerkstoffes der Metalllagen. Hierbei kann die Homogenisierung derart ausgeführt werden, dass ein Zustand erreicht wird, bei dem der Hauptbestandteil des Gefüges im gesamten Metallkörper das gleiche Kristallgitter hat.

In einer weiteren vorteilhaften Ausführungsform weisen die Metallplatinen einen konturierten Umriss auf und/oder sind in den Metallplatinen Unterbrechungen ausgebildet, die bei jeweils benachbart zueinander angeordneten Metallplatinen miteinander kommunizieren. Auf diese Weise können Metallbauteile mit einer komplizierten inneren und/oder äußeren Kontur hergestellt werden.

In einer besonders vorteilhaften Ausführungsform erfolgt nach dem Verfahrensschritt b) eine Konturierung mindestens einer der Metallplatinen, insbesondere durch einen Fräsprozess. Auf diese Weise können Metallkörper mit komplizierten Konturen schichtweise aufgebaut werden.

In einer vorteilhaften Ausführungsform ist der Grundwerkstoff der Metallplatinen und des Metallblechs ein Stahl und die Schmelzschicht ist eine aluminiumbasierte Schmelzschicht, insbesondere ein aus einer AlSi12-Legierung bestehend Schmelzschicht, und das Anpressen in Verfahrensschritt b) erfolgt solange, bis sich die Schmelzschicht in eine Ferritschicht umgewandelt hat. Diese Werkstoffkombination hat sich als besonders vorteilhaft herausgestellt, da ein Metallkörper mit hoher Verbindungsfestigkeit erzeugt wird.

In weiteren vorteilhaften Ausführungsformen ist der Grundwerkstoff der Metallplatinen und/oder des Metallblechs ein Stahlwerkstoff und die Schmelzschicht ist eine Schmelzschicht auf Aluminium-, Aluminiumsilizium-, Silber-, Kupfer-, oder Zinkbasis. Auch derartige Werkstoffkombinationen führen zu einem Metallkörper mit hoher Verbindungsfestigkeit.

Die Schmelzschicht kann dabei sowohl als Beschichtung, insbesondere als Beschichtung der Metallplatinen und/oder des Metallblechs, als auch als Blech oder Folie ausgebildet sein.

Die erfindungsgemäße Vorrichtung zur Durchführung des Verfahrens weist eine erste Kontaktplatte, eine weitere, parallel zur ersten Kontaktplatte verschiebbare Kontaktplatte, eine Schließvorrichtung und mindestens eine Energiequelle auf. Eine derartige Vorrichtung ist besonders gut zur Durchführung des erfindungsgemäßen Verfahrens geeignet.

Vorteilhafte Ausgestaltungen der Vorrichtung können folgende zusätzliche Merkmale aufweisen:
- Die Vorrichtung kann eine Temperaturregeleinrichtung und/oder eine Temperaturkontrolleinrichtung aufweisen.
- Die Kontaktplatten können aus einem Metall und/oder aus Keramik bestehen.
- Die mindestens eine Wärmequelle kann in einer Kontaktplatte integriert sein.
- Die mindestens eine Wärmequelle kann als Induktor ausgebildet sein.
- Mindestens eine Kontaktplatte kann Kühlkanäle aufweisen.

Die Kontaktplatten können sowohl alle aus dem gleichen Werkstoff als auch aus unterschiedlichen Werkstoffen hergestellt sein. Vorzugsweise bestehen Kontaktplatten, die erwärmt werden, aus einem metallischen Werkstoff, beispielsweise aus Stahl.

Kontaktplatten, die nicht erwärmt werden, können bevorzugt sowohl aus metallischen als auch nicht-metallischen Werkstoffen hergestellt werden. In besonders vorteilhafter Weise werden Kontaktplatten, die nicht erwärmt werden, aus einem Isolationsmaterial hergestellt. Dies hat den Vorteil, dass der Wärmeverlust verringert wird.

Die Kontaktplatten können eine Isolationsschicht aufweisen. Auch dadurch kann der Wärmeverlust verringert werden.

Weitere wichtige Merkmale und Vorteile der Erfindung ergeben sich aus den Unteransprüchen, aus den Zeichnungen und aus der zugehörigen Figurenbeschreibung. Es versteht sich, dass die vorstehend genannten Merkmale und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen und Zeichnungsfiguren weiter erläutert. Es zeigen:
- Fig. 1: eine schematische Darstellung einer Vorrichtung zur Herstellung eines Metallkörpers mit zwei darin eingelegten Metallplatinen;
- Fig. 2: eine schematische Darstellung charakteristischer Stadien des Verfahrens;
- Fig. 3: eine schematische Darstellung der Vorrichtung zur Herstellung eines Metallkörpers aus Fig. 1 mit einer Vielzahl von darin eingelegten Metallplatinen;
- Fig. 4: eine schematische Darstellung der Vorrichtung zur Herstellung eines Metallkörpers aus Fig. 1 mit zwei darin eingelegten Metallplatinen und einem zwischen den Metallplatinen angeordneten Metallblech; und
- Fig. 5: eine perspektivische Schemadarstellung von Verfahrensschritten zur Erzeugung eines aus zwei Metalllagen hergestellten Metallkörpers mit Kühlkanälen.

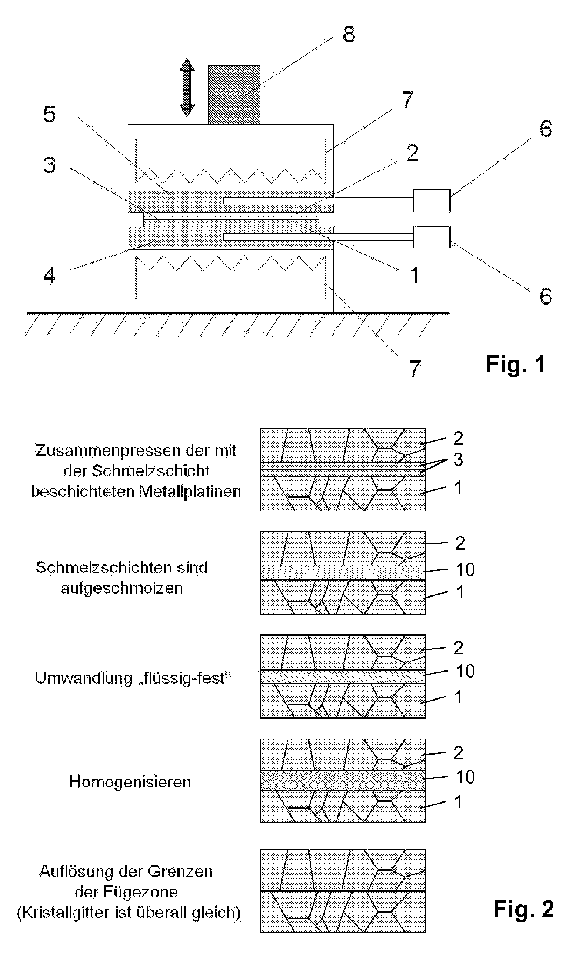

Fig. 1 zeigt eine schematische Darstellung einer Vorrichtung zur Herstellung eines Metallkörpers mit zwei darin eingelegten beschichteten Metallplatinen 1 und 2. Zwischen den Metallblechen ist eine Schmelzschicht 3 angeordnet.

Die Vorrichtung weist eine erste Kontaktplatte 4 sowie eine zweite, d.h. eine weitere, Kontaktplatte 5 auf. Die Kontaktplatten 4, 5 sind parallel zueinander angeordnet und weisen eine plattenförmige Gestalt auf. Die Metallplatinen 1 und 2 sind zwischen den Kontaktplatten 4, 5 angeordnet.

Temperaturregeleinrichtungen 6 steuern die als Induktoren ausgebildeten, in die Kontaktplatten 4, 5 integrierten Energiequellen 7. Durch eine Schließvorrichtung 8 kann der Abstand der Kontaktplatten 4, 5 zueinander variiert werden. Dadurch ist das Auseinander- und Zusammenfahren der Kontaktplatten 4,5 und damit ein Anpressen der zwischen den Kontaktplatten 4, 5 angeordneten Metallplatinen 1, 2 möglich.

### Erstes Ausführungsbeispiel des Verfahrens

Im ersten Ausführungsbeispiel besteht der Zwischenkörper einzig aus der Schmelzschicht 3, die als eine Beschichtung auf den Metallplatinen 1, 2 ausgebildet ist. Genauer handelt es sich um beschichtete Metallplatinen der Bezeichnung Mangan-Bor Stahl MBW1500AS (beschichtet mit AlSi12, Blechstärke 1,9 mm, Stärke der Beschichtung ca. 25-30µm). Ferner kommt ein Flussmittel mit der Bezeichnung FL20 (auf Basis von Fluoriden) zur Anwendung. Die Solidustemperatur des Stahls beträgt 1385°C, die Liquidustemperatur der Beschichtung beträgt 585°C. Die im ersten Ausführungsbeispiel verwendeten beschichteten Metallplatinen bilden allein unter Verwendung des Flussmittels eine stoffschlüssige Verbindung untereinander aus. Zudem führen die metallurgischen Vorgänge bei einer längeren Lötzeit (Zeit, für die die Temperatur in der Fügezone oberhalb der Liquidustemperatur der Beschichtung ist) unter konstanter Temperatur zur Bildung einer restschmelzefreien Fügezone. Die sich durch Diffusion verändernde Konzentration der Elemente führt zu einer isothermen Erstarrung der Schmelze. Dies kann als weiterer Vorteil angesehen werden: Die Bildung einer festen Fügezone bereits bei der Fügetemperatur schließt mögliche Verschiebungen der Stahlplatten relativ zueinander bei zufälligen mechanischen Belastungen, z.B. beim Herausnehmen des gelöteten Bauteils aus der Vorrichtung, aus.

In dem ersten Ausführungsbeispiel werden die voneinander beabstandeten Kontaktplatten 4, 5 zunächst bis zu einer Temperatur zwischen der Liquidustemperatur der Beschichtung und der Solidustemperatur des Grundwerkstoffes der Metallplatinen 1, 2 mit Hilfe eines Induktors 7 aufgeheizt, wobei die Kontaktplattentemperatur mittels einer Temperaturregeleinrichtung 6 kontrolliert und geregelt wird.

Anschließend werden mindestens zwei Metallplatinen 1, 2 mit dem Flussmittel versehen und auf die erste Kontaktplatte 4 platziert. Hierbei liegt die Metallplatine 1 unmittelbar auf der Kontaktplatte 4 auf.

Daraufhin wird die zweite Kontaktplatte 5 in Richtung der ersten Kontaktplatte 4 gefahren und in Kontakt mit der Metallplatine 2 gebracht.

Anschließend werden mit Hilfe der Schließvorrichtung 8 die Metallplatinen 1, 2 unter einem voreingestellten Druck zusammengepresst und eine bestimmte Zeit gehalten, bis die Beschichtung schmilzt und danach in der Fügezone 10 eine Umwandlung "flüssig-fest" stattfindet. Zwischen zwei übereinander angeordneten Metallplatinen 1, 2 entsteht somit eine stoffschlüssige Verbindung.

Abschließend wird die zweite Kontaktplatte 5 entgegengesetzt zur ersten Kontaktplatte 4 verfahren und die zusammengefügten Metalllagen werden herausgenommen und abgekühlt.

Die stoffschlüssige Verbindung zwischen den Metallplatinen erfolgt durch das Aufschmelzen der Beschichtung unter Zuhilfenahme des Flussmittels. Die Beschichtung kann beispielsweise durch ein konventionelles Verfahren (elektrolytisch, durch Eintauchen, Besprühen u. ä.) hergestellt werden. Die Flussmittelschicht wird vor dem Fügeprozess auf die Oberflächen der Metallplatinen 1, 2 aufgetragen.

In Fig. 2 sind charakteristische Schritte des Fügeprozesses bei der Ausbildung der stoffschlüssigen Verbindung zwischen den beiden beschichteten Metallplatinen 1, 2 dargestellt. Hierbei sind zur Visualisierung des Gefüges innerhalb der Metallplatinen 1, 2 schematische Korngrenzen eingezeichnet. Die im ersten Ausführungsbeispiel als Beschichtung der Metallplatinen 1, 2 ausgebildeten Schmelzschicht 3 schmilzt durch die Einwirkung von Druck, Temperatur nach einer gewissen Zeit auf. Des Weiteren werden an die Schmelzschicht 3 angerenzende Bereich des Grundwerkstoffs der Metallplatinen 1, 2 in der flüssigen Schmelzschicht 3 gelöst. Die Umwandlung "flüssig-fest" in der Fügezone 10 im Laufe des Fügeprozesses ist die Folge der Änderung der Elementenkonzentration in der Fügezone 10, die durch die Diffusionsvorgänge verursacht wird. Diese Diffusionsvorgänge verursachen ihrerseits die Phasenumwandlungen, die für die Eigenschaftsänderungen verantwortlich sind. Bei einer ausreichenden Haltezeit kann durch die Phasenumwandlung der Zustand so geändert werden, dass sich die Materialeigenschaften der Fügezone 10 den Grundwerkstoffeigenschaften angleichen. Durch die mit Hilfe der Schließvorrichtung 8 aufgebrachte Kraft, die auf die Blechoberfläche gleichmäßig verteilt wird, wird ein guter Kontakt zwischen den Metallplatinen und somit eine besonders starke ausgeprägte stoffschlüssige Verbindung gewährleistet.

### Zweites Ausführungsbeispiel des Verfahrens

Als zweites Ausführungsbeispiel des Verfahrens wird das sequentielle Fügen von beschichteten Metallblechen beschrieben. Wie im ersten Ausführungsbeispiel besteht der Zwischenkörper wieder einzig aus der Schmelzschicht 3, die als eine Beschichtung auf den Metallplatinen 1, 2 ausgebildet ist. Es handelt sich hierbei wieder um beschichtete Metallplatinen der Bezeichnung Mangan-Bor Stahl MBW1500AS (beschichtet mit AISi12, Blechstärke 1,9 mm, Stärke der Beschichtung ca. 25-30µm). Ferner kommt wieder das Flussmittel mit der Bezeichnung FL20 (auf Basis von Fluoriden) zur Anwendung.

Im zweiten Ausführungsbeispiel werden folgende Schritte (im Folgenden als S abgekürzt) durchgeführt:
S1: Die erste Kontaktplatte 4 wird bis 1100°C aufgeheizt.
S2: Die zweite Kontaktplatte 5 wird in Richtung der ersten Kontaktplatte 4 gefahren und in Kontakt mit der ersten Kontaktplatte 4 gebracht.
S3: Durch den Kontakt mit der ersten Kontaktplatte 4 wird die zweite Kontaktplatte 5 ebenfalls bis 1100°C aufgeheizt. Die Temperatur wird dabei mit den Temperaturregeleinrichtungen 6 geregelt. Nach dem Aufheizen der zweiten Kontaktplatte 5 werden die Kontaktplatten 4, 5 wieder auseinandergefahren.
S4: Die Oberflächen der mit der Schmelzschicht 3 beschichteten Metallplatinen 1, 2 werden gereinigt.
S5: Auf die Blechoberflächen wird das Flussmittel aufgetragen.
S6: Die Metallplatine 2 wird auf der Metallplatine 1 platziert. Dieses Paket aus den beiden Metallplatinen 1, 2 wird auf der erste Kontaktplatte 4 positioniert.
S7: Die zweite Kontaktplatte 5 wird mit Hilfe der Schließvorrichtung 8 in Richtung der ersten Kontaktplatte 4 gefahren und mit einem Druck von 2 MPa an Metallplatine 2 angepresst.
S8: Die Metallplatinen 1, 2 werden 1 Minute zwischen den Kontaktplatten 4, 5 gehalten.
S9: Die Kontaktplatten 4, 5 werden auseinandergefahren und die zusammengefügten Metalllagen herausgenommen und abgekühlt.
S10: In den zusammengefügten Metalllagen werden Konturen ausgefräst.
S11: Die Schritte S6 bis S10 werden wiederholt, bis die gewünschte Anzahl von Metallplatinen zusammengefügt und konturiert sind.

Für die Homogenisierung der Mikrostruktur und der Werkstoffeigenschaften kann der gefertigte Metallkörper in einem Hochtemperatur- bzw. Vakuumofen ausgelagert werden.

### Drittes Ausführungsbeispiel des Verfahrens

Als drittes Ausführungsbeispiel des Verfahrens wird das gleichzeitige Fügen von mehreren vorkonturierten Stahlblechen beschrieben, wobei die Haltezeit der Metallbleche zwischen den Kontaktplatten relativ lange gewählt wird. Wie im ersten Ausführungsbeispiel besteht der Zwischenkörper wieder einzig aus der Schmelzschicht 3, die als eine Beschichtung auf den Metallplatinen 1, 2 ausgebildet ist. Es handelt sich hierbei wieder um beschichtete Metallplatinen der Bezeichnung Mangan-Bor Stahl MBW1500AS (beschichtet mit AlSi12, Blechstärke 1,9 mm, Stärke der Beschichtung ca. 25-30µm). Ferner kommt wieder das Flussmittel mit der Bezeichnung FL20 (auf Basis von Fluoriden) zur Anwendung.

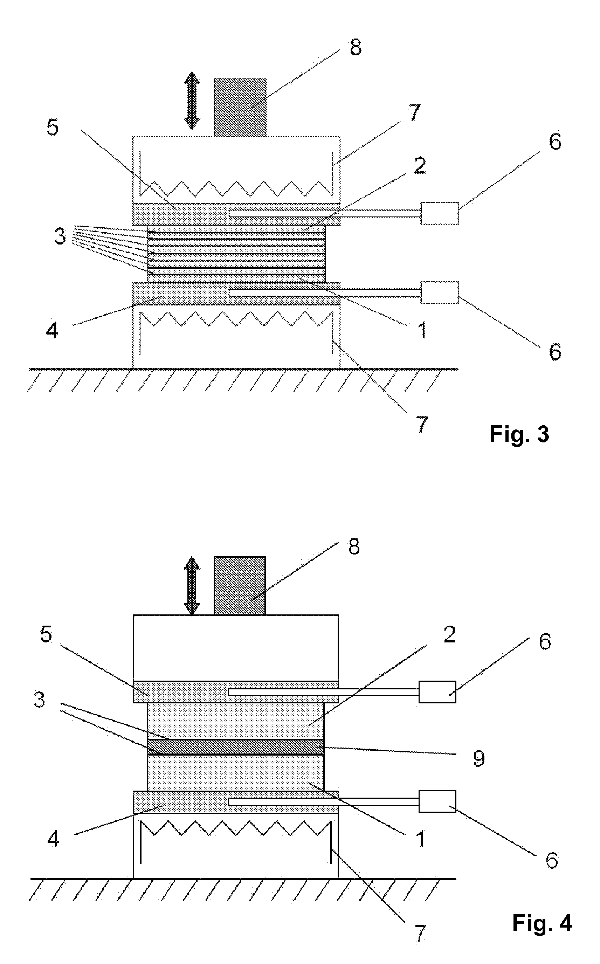

In diesem Beispiel besteht der Ausgangsschichtkörper aus acht Metallplatinen, die jeweils mit einer Beschichtung aus der Schmelzschicht 3 versehen sind. Dieses Ausführungsbeispiel ist in Fig. 3 schematisch dargestellt. Fig. 3 zeigt eine schematische Darstellung der Vorrichtung zur Herstellung eines Metallkörpers aus Fig. 1 mit acht darin eingelegten Metallplatinen. Von den insgesamt acht Metallplatinen sind in Fig. 3 nur zwei mit den Bezugszeichen 1 bzw. 2 versehen. Gleiche Bestandteile der Vorrichtung sind hierbei mit denselben Bezugszeichen wie in Fig. 1 versehen. In diesem Ausführungsbeispiel werden sowohl die erste Kontaktplatte 4 als auch die zweite Kontaktplatte 5 induktiv erwärmt. Anschließend werden folgende Schritte ausgeführt:
S1: Die Konturen jeder Metallplatine 1, 2 werden vor dem eigentlichen Fügevorgang ausgeschnitten.
S2: Die Kontaktplatten 4, 5 werden bis 1100°C aufgeheizt.
S3: Acht Metallplatinen 1, 2 werden gereinigt, mit dem Flussmittel versehen und zusammengedrückt. Dieses Paket wird auf die erste Kontaktplatte 4 gelegt.
S4: Die zweite Kontaktplatte 5 wird mit Hilfe der Schließvorrichtung 8 in Richtung der ersten Kontaktplatte 4 gefahren und mit einem Druck von 5 MPa an die Metallplatine 2 angepresst.
S5: Die insgesamt acht beschichteten Metallplatinen 1, 2 werden für 20 Minuten zwischen den Kontaktplatten 4, 5 gehalten.
S6: Der nach Ausbildung der stoffschlüssigen Verbindung zwischen den einzelnen Metalllagen entstandene Metallkörper wird herausgenommen und bis auf Raumtemperatur an Luft abgekühlt.

Der auf diese Weise hergestellte Metallkörper benötigt keine weitere Wärmebehandlung, da bei diesem Ausführungsbeispiel aufgrund der relativ langen Haltezeit bereits eine Homogenisierung stattgefunden hat, denn nach 20 Minuten Haltezeit bei Kontaktplattentemperatur von 1100°C wird in der Fügezone 10 nur noch eine homogene Ferritschicht beobachtet. Des Weiteren sind keine spröden intermetallischen Phasen vorhanden.

### Viertes Ausführungsbeispiel des Verfahrens

Als viertes Ausführungsbeispiel des Verfahrens wird das gleichzeitige Fügen von mehreren vorkonturierten Metallplatinen 1, 2 beschrieben, wobei die Metallplatinen 1, 2 für eine relativ kurze Haltezeit zwischen den Kontaktplatten 4, 5 platziert werden und anschließend eine Wärmebehandlung in einem Ofen stattfindet. Der Metallkörper wird hierbei prinzipiell nach der Methode aus dem zweiten Ausführungsbeispiel hergestellt. Die Kontaktplattentemperatur beträgt jedoch 1000°C und die Haltezeit 5 Minuten. Der auf diese Weise hergestellte Metallkörper wird anschließend in einem Hochtemperaturvakuumofen 3 Stunden bei einer Temperatur von 1000°C ausgelagert. Durch diese Auslagerung im Vakuum wird eine homogene Mikrostruktur im Bereich der Fügezone erreicht und mögliche Oxidationsvorgänge vermieden. Die Festigkeit der Fügezone ist dabei mit der Festigkeit des Grundmaterials vergleichbar. Nach der Homogenisierung besitzt der Hauptbestandteil des Gefüges im gesamten Metallkörper das gleiche Kristallgitter

### Fünftes Ausführungsbeispiel des Verfahrens

Als fünftes Ausführungsbeispiel wird das Fügen von mehreren Ausgangsschichtkörpern zu einem Metallkörper beschrieben. Hierbei wird der Metallkörper in diesem Beispiel aus insgesamt 17 Metallplatinen aufgebaut. Wie im ersten Ausführungsbeispiel besteht der Zwischenkörper wieder einzig aus der Schmelzschicht 3, die als eine Beschichtung auf den Metallplatinen 1, 2 ausgebildet ist. Es handelt sich hierbei wieder um beschichtete Metallplatinen der Bezeichnung Mangan-Bor Stahl MBW1500AS (beschichtet mit AlSi12, Blechstärke 1,9 mm, Stärke der Beschichtung ca. 25-30µm). Ferner kommt wieder das Flussmittel mit der Bezeichnung FL20 (auf Basis von Fluoriden) zur Anwendung. Folgende Schritte werden durchgeführt:
S1: Es werden jeweils eine erste (obere) und eine zweite (untere) Hälfte des herzustellenden Metallkörpers nach der Methode des dritten Ausführungsbeispiels hergestellt. Jede Hälfte besteht dabei aus acht beschichteten Metallplatinen. Die Temperatur und die Haltezeit betragen jeweils 1000°C und 5 Minuten.
S2: Es wird ein Zwischenplatine präpariert, indem das Flussmittel auf beide mit der Schmelzschicht 3 beschichtete Oberflächen aufgetragen wird. Bei der Zwischenplatine handelt es sich ansonsten um ein Metallplatine 1, 2.
S3: Die gefertigten Hälften des Metallkörpers werden auf 1000°C vorgewärmt.
S4: Die Zwischenplatine wird zwischen den aufgewärmten Bauteilhälften platziert.
S5: Die aus Schritt S4 erhaltene Struktur wird zwischen den Kontaktplatten 4, 5 zusammengepresst und 1 Minute gehalten.
S6: Das fertige Bauteil wird im Hochtemperaturvakuumofen 3 Stunden bei 1000°C ausgelagert.

Auf diese Weise können relativ dicke Metallkörper hergestellt werden. Es werden dabei zu langsame Aufheizraten und mögliche Genauigkeitsprobleme infolge unterschiedlicher thermischer Ausdehnung der einzelnen Metallplatinen 1, 2 ausgeschlossen.

Für eine exakte Positionierung und Vermeidung einer Verschiebung der beschichteten Metallbleche während des Fügevorgangs zueinander können Fixierstifte verwendet, die beispielsweise in Ecken des zu fügenden Blechstapels eingearbeitet sind.

### Sechstes Ausführungsbeispiel des Verfahrens

Im sechsten Ausführungsbeispiel ist der Zwischenkörper als ein beidseitig mit der Schmelzschicht 3 beschichtetes Metallblech 9 ausgebildet. Die Solidustemperatur des Grundwerkstoffs des Metallblechs 9 ist dabei höher ist als die Liquidustemperatur der Schmelzschicht 3.

Dieses Ausführungsbeispiel ist in Fig. 4 schematisch dargestellt. Fig. 4 zeigt eine schematische Darstellung der Vorrichtung zur Herstellung eines Metallkörpers aus Fig. 1 mit zwei darin eingelegten Metallplatinen 1, 2 und einem zwischen den Metallplatinen 1, 2 angeordneten Metallblech 9. Gleiche Bestandteile der Vorrichtung sind hierbei mit denselben Bezugszeichen wie in Fig. 1 versehen. Das Metallblech 9 ist beidseitig mit der Schmelzschicht 3 beschichtet. Die Metallplatinen 1, 2 hingegen sind unbeschichtet.

Genauer kommen in diesem Beispiel Metallplatinen aus dem Stahl X2CrNiMo17-12-2 (Werkstoff-Nr. 1.4404, Dicke 10 mm) und der Zwischenkörper besteht aus einem Blech aus dem Stahl MBW1500AS (Dicke 1.9 mm), d.h. einem Metallblech 9, das mit einer AlSi12-Beschichtung versehen ist. Folgende Schritte werden durchgeführt:
S1: Die erste Kontaktplatte 4 wird bis 750°C aufgeheizt.
S2: Die zweite Kontaktplatte 5 wird nach unten gefahren und in Kontakt mit der ersten Kontaktplatte 4 gebracht.
S3: Durch den Kontakt mit der unteren Heizplatte wird die obere Heizplatte bis 750°C aufgeheizt. Die Temperatur wird dabei mit den Temperaturregeleinrichtungen 6 geregelt.
S4: Die Konturen jeder Metallplatine 1, 2 sowie des Metallblechs 9 werden vor dem Fügevorgang ausgeschnitten.
S5: Die Metallplatinen 1, 2 und das Metallblech 9 werden gereinigt. Die Oberflächen des Metallblechs 9 werden mit Flussmittel versehen.
S6: Das Metallblech 9 wird zwischen die Metallplatinen 1, 2 platziert. Die derart präparierte Struktur wird auf die erste Kontaktplatte 4 gelegt.
S7: Die zweite Kontaktplatte 5 wird mit Hilfe der Schließvorrichtung 8 nach unten gefahren und mit einem Druck von 3 MPa an die Metallplatine 2 angepresst.
S8: Ca. 20-30 s nach dem Aufschmelzen der Schmelzschicht 3 (Temperatur des Metallblechs beträgt hierbei ca. 650°C) wird die entstandene Struktur herausgenommen und auf ein weiteres Metallblech 9 und eine weitere (kalte) Metallplatine gelegt.
S9: Die Struktur wird wieder zwischen die Kontaktplatten 4, 5 platziert.
S10: Die Schritte S7 bis S9 werden wiederholt, bis das Gesamtbauteil aufgebaut ist.
S11: Anschließend wird die Temperatur der ersten Kontaktplatte 4 bis auf 1100°C erhöht. Das Bauteil wird bei dieser Temperatur 1 Std. ausgelagert.

### Siebtes Ausführungsbeispiel des Verfahrens

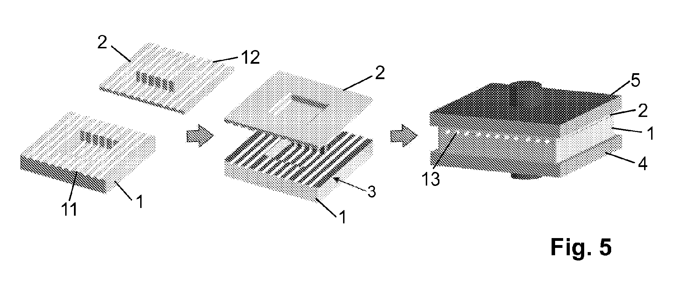

Fig. 5 zeigt eine weitere Ausführungsform des Verfahrens, wobei einzelne Verfahrensschritten zur Erzeugung eines aus zwei Metalllagen hergestellten Metallkörpers mit Kühlkanälen dargestellt sind.

Der Metallkörper soll aus den beiden Metallplatinen 1 und 2 aufgebaut werden. Die Metallplatinen 1, 2 sind hierbei nicht planar, sondern dreidimensional geformt. In der ersten Metallplatine 1 sind nutförmige Vertiefungen 11 mit Hilfe eines Fräsprozesses eingebracht worden. In analoger Weise wurden in die zweite Metallplatine 2 ebenfalls nutförmige Vertiefungen 12 eingebracht. Die Vertiefungen 11, 12 sind dabei derart aufeinander abgestimmt, dass sie bei zusammengefügten Metallplatinen 1, 2 einen oder mehrere Kanäle 13, die beispielsweise als Kühlkanäle dienen können, bilden.

Vor dem Zusammenfügen der Metallplatinen 1, 2 wird eine Schmelzschicht 3 in Form einer Lotpaste auf die Fügefläche aufgetragen. In diesem Beispiel besteht der Zwischenkörper damit allein aus der als Lotpaste ausgebildeten Schmelzschicht 3.

Daraufhin werden die zueinander positionierten Metallplatinen 1, 2 zwischen die erste Kontaktplatte 4 und die zweite Kontaktplatte 5 eingebracht. Zur Ausbildung einer stoffschlüssigen Verbindung zwischen den Metallplatinen 1, 2 wird anschließend das im ersten Ausführungsbeispiel detailliert beschriebene Verfahren angewendet.

### BEZUGSZEICHENLISTE

- 1: Metallplatine
- 2: Metallplatine
- 3: Schmelzschicht
- 4: Erste Kontaktplatte
- 5: Zweite Kontaktplatte
- 6: Temperaturregeleinrichtung
- 7: Energiequelle
- 8: Schließvorrichtung
- 9: Metallblech
- 10: Fügezone
- 11: Vertiefung
- 12: Vertiefung
- 13: Kanal

## Patentansprüche

1. Verfahren zur Herstellung eines Metallkörpers aus übereinander angeordneten Metalllagen mit folgenden Verfahrensschritten:
a) Positionieren eines mindestens aus zwei übereinander angeordneten Metallplatinen (1, 2) und mindestens einem jeweils zwischen zwei der Metallplatinen (1, 2) positionierten Zwischenkörper, der zumindest eine Schmelzschicht (3) mit einem metallischen Anteil aufweist, bestehenden Ausgangsschichtkörpers auf einer ersten Kontaktplatte (4), wobei die Liquidustemperatur der Schmelzschicht geringer ist als die Solidustemperatur des Grundwerkstoffs der Metallplatinen (1, 2);
b) Anpressen einer zur ersten Kontaktplatte (4) parallelen weiteren Kontaktplatte (5) an den Ausgangsschichtkörper, sodass eine Druckaufbringung senkrecht zu den Metallplatinen (1, 2) erfolgt, wobei mindestens die weitere Kontaktplatte (5) eine Temperatur zwischen der Liquidustemperatur der Schmelzschicht (3) und der Solidustemperatur des Grundwerkstoffs der Metallplatinen (1, 2) besitzt, und wobei das Anpressen mit einem Druck, insbesondere mit einem Druck von 1 bis 50 MPa, bevorzugt von 2 bis 10 MPa, und für eine Zeitspanne, insbesondere für eine Zeitspanne von 5 Sekunden bis 60 Minuten, bevorzugt für 20 Sekunden bis 10 Minuten, erfolgt, sodass zwischen zwei übereinander angeordneten Metallplatinen (1, 2) eine stoffschlüssige Verbindung entsteht.

2. Verfahren nach Anspruch 1, wobei der Zwischenkörper einzig aus der Schmelzschicht (3) besteht und diese als eine Beschichtung auf mindestens einem der Metallplatinen (1, 2) ausgebildet ist.

3. Verfahren nach Anspruch 1, wobei der Zwischenkörper als ein beidseitig mit der Schmelzschicht (3) beschichtetes Metallblech (9) ausgebildet ist und die Solidustemperatur des Grundwerkstoffs des Metallblechs (9) höher ist als die Liquidustemperatur der Schmelzschicht (3).

4. Verfahren nach einem der vorhergehenden Ansprüche, wobei anschließend folgende Verfahrensschritte ausgeführt werden:
c) Entfernen mindestens der weiteren Kontaktplatte (5);
d) Anordnen mindestens eines weiteren Zwischenkörpers und mindestens einer weiteren Metallplatine (1, 2) auf den Ausgangsschichtkörper;
e) Erneutes Ausführen des Verfahrensschritts b), sodass eine stoffschlüssige Verbindung zwischen dem Ausgangsschichtkörper und der weiteren Metallplatine (1, 2) entsteht.

5. Verfahren nach einem der vorhergehenden Ansprüche, wobei anschließend folgende Verfahrensschritte ausgeführt werden:
f) Entfernen mindestens der weiteren Kontaktplatte (5);
g) Anordnen eines weiteren Zwischenkörpers auf den Ausgangsschichtkörper;
h) Anordnen eines weiteren nach einem der vorhergehenden Ansprüche hergestellten Ausgangsschichtkörper auf den weiteren Zwischen körper;
i) Erneutes Ausführen des Verfahrensschritts b), sodass eine stoffschlüssige Verbindung zwischen den beiden Ausgangsschichtkörpern entsteht.

6. Verfahren nach einem der vorhergehenden Ansprüche, wobei ein Flussmittel zwischen den Zwischenkörper und den Metallplatinen (1, 2) aufgebracht wird.

7. Verfahren nach einem der vorhergehenden Ansprüche, wobei die weitere Kontaktplatte (5) in Verfahrensschritt b) auf eine Temperatur gebracht wird, sodass die Schmelzschicht (3) aufschmilzt und anschließend die Kontaktplatte (5) solange auf konstanter Temperatur gehalten wird, bis die sich gebildete Schmelze isotherm erstarrt ist.

8. Verfahren nach einem der vorhergehenden Ansprüche, wobei mindestens eine der Kontaktplatten (4, 5) eine Energiequelle (7), insbesondere einen Induktor, zum Temperieren der Kontaktplatte (4, 5) aufweist.

9. Verfahren nach einem der vorhergehenden Ansprüche, wobei vor dem Verfahrensschritt a) ein Kontaktieren der ersten (4) und der weiteren Kontaktplatte (5) sowie ein gemeinsames Temperieren der Kontaktplatten (4, 5) erfolgt.

10. Verfahren nach einem der vorhergehenden Ansprüche, wobei in Verfahrensschritt b) die erste Kontaktplatte (4, 5) gekühlt wird.

11. Verfahren nach einem der vorhergehenden Ansprüche, wobei der Metallkörper nach dem stoffschlüssigen Verbinden der Metallplatinen (1, 2) zwischen Kühlplatten, insbesondere wassergekühlte Kühlplatten, abgekühlt wird.

12. Verfahren nach einem der vorhergehenden Ansprüche, wobei die vorgenannten Verfahrensschritte in Umgebungsatmosphäre, insbesondere außerhalb eines Ofens, ausgeführt werden und anschließend eine Wärmebehandlung des hergestellten Metallkörpers in einem Ofen, insbesondere in einem Vakuumofen, erfolgt.

13. Verfahren nach einem der vorhergehenden Ansprüche, wobei nach dem Verfahrensschritt b) eine Konturierung mindestens eines der beschichteten Metallplatinen (1, 2), insbesondere durch einen Fräsprozess, erfolgt.

14. Verfahren nach einem der vorhergehenden Ansprüche, wobei der Blechgrundwerkstoff der Metallplatinen (1, 2), und falls rückbezogen auf Anspruch 3 der Blechgrundwerkstoff des Metallblechs (9), ein Stahl und die Schmelzschicht (3) eine aluminiumbasierte Schmelzschicht (3), insbesondere eine aus einer AlSi12-Legierung bestehende Schmelzschicht (3), ist, und wobei das Anpressen in Verfahrensschritt b) solange erfolgt, bis sich die Schmelzschicht (3) in eine Ferritschicht umgewandelt hat.

15. Vorrichtung zur Durchführung des Verfahrens nach einem der Ansprüche 1 bis 14, mit:
- einer ersten Kontaktplatte (4);
- einer weiteren, parallel zur ersten Kontaktplatte (4) verschiebbaren Kontaktplatte (5);
- einer Schließvorrichtung (8); und
- mindestens einer Energiequelle (7).
